# EUROPEAN PATENT SPECIFICATION

(11) **EP 3 745 290 B1**
(45) Date of publication and mention of the grant of the patent: **08.12.2021**
(21) Application number: 20186974.0
(22) Date of filing: 09.02.2018
(51) Int. Cl.: H04L 29/06, G06F 21/41, H04L 9/32, H04L 9/08

(54) **TRUSTED LOGIN METHOD, SERVER, AND SYSTEM**
VERTRAUENSWÜRDIGE ANMELDEMETHODE, SERVER UND SYSTEM
MÉTHODE D'OUVERTURE DE SESSION, SERVEUR ET SYSTÈME DE CONFIANCE

(30) Priority: 09.02.2017 CN 201710071568
(43) Date of publication of application: 02.12.2020
(62) Divisional of application: 18707488.5
(73) Proprietor: Advanced New Technologies Co., Ltd., George Town, Grand Cayman KY1-9008 (KY)
(72) Inventor: YANG, Wenxue, Hangzhou, Zhejiang (CN)
(74) Representative: Fish & Richardson P.C.

(56) References cited:
- EP-A1- 2 491 694
- US-A1- 2013 086 645
- US-A1- 2014 025 753
- US-B1- 9 531 719

## Description

### CLAIM OF PRIORITY

This application claims priority to Chinese Patent Application No. 201710071568.6 filed on February 9, 2017.

### TECHNICAL FIELD

The present application relates to the field of software technologies, and in particular, to a trusted login method, server and system.

### BACKGROUND ART

With unceasing development of science and technologies, software technologies are developed rapidly, and various application systems emerge endlessly. In a general case, when using an application system, a user needs to input an account number and a password to implement a login before enjoying a corresponding service.

A client may log in to a system A by using an account number and a password that are registered on the system A; or may also log in to a system B trusting the system A by using the account number and the password that are registered on the system A. When a user of the system A logs in to the system B trusting the system A, such a login manner is referred to as a trusted login. After logging in to the system B in a trusted manner, the user of the system A may access a corresponding service provided by the system B and perform an operation thereon.

At present, in an existing trusted login solution, the system B allocates a trusted login number to the system A. Then, the system A writes, into a trusted login request, user login request parameters in the system A and the login number issued by the system B, encrypts the trusted login request by using a key and sends the encrypted request. The system B decrypts the received trusted login request by using a public key provided by the system A. After decryption, the system B checks whether the trusted login number in the trusted login request is legal. If it is legal, the user of the system A is permitted to log in to the system B, and the trusted login is successful. However, once the login is successful with the existing trusted login solution, the client of the system A can access all service pages of the system B and perform operations thereon, thus causing a security threat. For example, if database theft or account theft occurs in the system A (for example, a map application system) due to a low security requirement, the stealer may log in to the system A by using user information obtained through the database theft or account theft, and then log in to the system B (for example, a payment application system) through the system A in a trusted manner, so as to perform an operation on a page (for example, a payment page) of the system B with a higher security requirement. As a result, the system B with a higher security requirement faces a risk.

WO 2011/047722 discloses a method carried out by a controller. The method includes receiving a message including a request token. A request token is a value used by a consumer to request authorization from a user to access protected resources from a service provider. A service provider is at least one of a software application and web site that is configured to provide access to protected resources. A consumer is at least one of a software application and a web site that is configured to access a service provider on behalf of a user. The method further includes determining whether the message meets policy settings governing the access to protected resources; and, if it is determined that the message does not meet the policy settings, preventing the request token from being forwarded to the service provider associated with the request token.

### SUMMARY OF THE INVENTION

Embodiments of the present invention provide a trusted login method and apparatus, and an electronic device, which are used to solve a security problem in an inter-system trusted login in the prior art, and enhance security of the trusted login. The invention is defined in the claims.

The foregoing one or more technical solutions in the embodiments of the present invention have at least the following technical solutions:
In the embodiments of the present invention, when a page access request sent by a target client terminal corresponding to a second server is received, to request to access a service page provided by a first server, a temporary trusted login token in the page access request is acquired and it is judged whether the temporary trusted login token has a service privilege to access the service page. If the temporary trusted login token has the service privilege, the target client terminal is permitted to log in to the first server in a trusted manner, and the service page that is requested to be accessed by the target client terminal is returned. In this way, a user performs a trusted login can access only a corresponding service page under a restriction from the service privilege of the temporary trusted login token, and cannot access another service page of the system, thus solving a security problem in a trusted login in the prior art and enhancing security of the trusted login.

### BRIEF DESCRIPTION OF THE DRAWINGS

FIG. 1a is a flowchart of a trusted login method at a target client terminal according to Embodiment I of the present application;
FIG. 1b is a flowchart of a trusted login method at the side of a second server according to Embodiment I of the present application;
FIG. 1c is a token delivery flowchart of a trusted login method at the side of a first server according to Embodiment I of the present application;
FIG. 1d is a token verification flowchart of a trusted login method at the side of a first server according to Embodiment I of the present application;
FIG. 1e is a schematic interaction diagram of a trusted login method according to Embodiment I of the present application;
FIG. 2 is a schematic diagram of a first server according to Embodiment II of the present application;
FIG. 3 is a schematic diagram of a second server according to Embodiment II of the present application; and
FIG. 4 is a schematic diagram of a trusted login system according to Embodiment II of the present application.

### DETAILED DESCRIPTION OF THE EMBODIMENTS

The main implementation principle, specific implementations, and corresponding achievable beneficial effects according to the technical solution of the embodiments of the present application are described in detail below with reference to the accompanying drawings.

### Embodiment I

This embodiment of the present application provides a trusted login method, and the method is applied to a trusted login system. The system includes two application systems. A first application system includes a first server and a first client terminal. A second application system includes a second server and a second client terminal (that is, a target client terminal). A target access entrance to a service page provided by the first server is provided on an application interface of the target client terminal in an embedded manner. A user may trigger, by performing an operation on the target access entrance, the target client terminal to access the service page provided by the first server by means of the trusted login method.

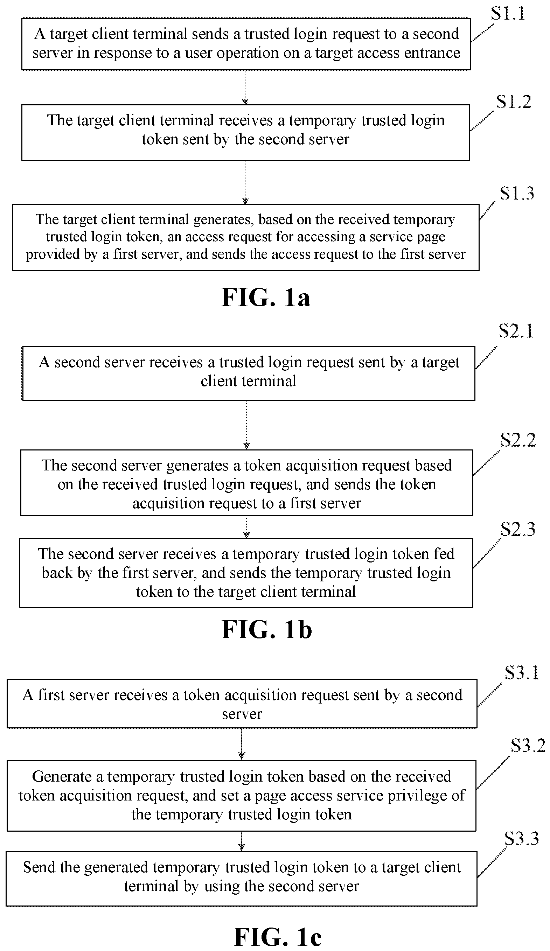

Referring to FIG. 1a, a trusted login method according to an embodiment of the present application is shown. The method is applied to a target client terminal, and includes:
S1.1: A target client terminal sends a trusted login request to a second server in response to a user operation on a target access entrance, the trusted login request being used to request to log in to a first server and access a service page provided by the first server.

The trusted login request includes a service Identification (ID) of the service page to be accessed by the target client terminal. The service ID is used to indicate a specific service page to be accessed by the target client terminal. The trusted login request further includes a user account number and a password. The user account number and the password are used to request to log in to the second server, or enable the second server to verify legality of the target client terminal. Only when the target client terminal successfully logs in to the second server by using the user account number and the password, or only after the target client terminal passes the legality verification performed by the second server, the second server sends a temporary trusted login token to the target client terminal in response to the trusted login request sent by the target client terminal.

S1.2: The target client terminal receives the temporary trusted login token which is sent by the second server in response to the trusted login request.

The temporary trusted login token is a certificate for the target client terminal to log in to the first server and access the service page provided by the first server. A service privilege to access the service page is written in the temporary trusted login token. The target client terminal is forbidden to access service pages beyond the range of the service privilege of the temporary trusted login token. The temporary trusted login token is generated by the first server according to a token acquisition request sent by the second server, and is fed back to the second server. Then, the second server sends the temporary trusted login token to the target client terminal.

S1.3: The target client terminal generates, based on the received temporary trusted login token, an access request for accessing the service page provided by the first server, and sends the access request to the first server.

Specifically, during generation of the access request for accessing the service page, the access request may be generated by encapsulating the temporary trusted login token and the to-be-accessed service ID; or may also be generated by encapsulating the temporary trusted login token, the to-be-accessed service ID, and the user account number . When the access request includes the user account number, based on the user account number in the access request, the first server may search for a first user account number for the target client terminal or establish a first user account number on the first server according to a user mapping relationship agreed upon by the first server and the second server.

After S1.3, the target client terminal waits for the first server to return the service page. Upon receiving the service page returned by the first server, the target client terminal performs an operation on the service page. Because an access of the target client terminal to the service page of the first server is restricted by the service privilege of the temporary trusted login token, the target client terminal can access only a service page within the range of the service privilege of the temporary trusted login token when logging in to the first server in a trusted manner, thus enhancing the security of accessing the service page.

Referring to FIG. 1b, a trusted login method according to an embodiment of the present application is shown. The method is applied to a second server, and includes:
S2.1: The second server receives a trusted login request sent by a target client terminal.
S2.2: The second server generates a token acquisition request based on the received trusted login request, and sends the token acquisition request to a first server.

Specifically, the token acquisition request may be generated by encapsulating the trusted login request and a server identifier of the second server. The first server may judge, according to the server identifier, whether the second server is a trust-granted server. If the second server is a trust-granted server, the first server parses the trusted login request in the token acquisition request, and feeds back a temporary login token. If the second server is not a trust-granted server, the first server refuses to feed a temporary login token back to the second server.

The token acquisition request may also be generated by encapsulating the trusted login request and a current trusted login identifier issued by the first server to the second server. The current trusted login identifier is a certificate for the second server to acquire a temporary trusted login token. If the current trusted login identifier is legal, the first server parses the trusted login request in the token acquisition request, to judge whether to feed back the temporary login token. If the current trusted login identifier is illegal, the first server refuses to feed the temporary login token back to the second server.

The current trusted login identifier may be a trusted login number. The trusted login number is issued by the first server to the trust-granted second server. The trusted login number may be a fixed number, and is effective within a trust granting period once issued. The trusted login number may also be a constantly updated dynamic number. The first server updates the trusted login number according to a particular time period and issues the updated trusted login number to the second server.

S2.3: The second server receives the temporary trusted login token fed back by the first server, and sends the temporary trusted token to the target client terminal.

Complementarily, the second server may directly perform S2.2 after S2.1. Alternatively, the second server may parse the received trusted login request after S2.1, to judge whether the trusted login request is legal, for example, to judge whether the target client terminal has logged in to the second server or whether the first server providing the service page signs an agreement with the second server. If judging that the trusted login request is legal, the second server performs S2.2. If judging that the trusted login request is illegal, the second server returns a request failure message to the target client terminal.

Referring to FIG. 1c, a token delivery method in a trusted login method according to an embodiment of the present application is shown. The token delivery method is applied to a first server, and includes:
S3.1: The first server receives a token acquisition request sent by a second server.

The first server may directly perform S3.2 after receiving the token acquisition request; or may also judge, based on the token acquisition request, whether a target client terminal is a trust-granted client terminal and select whether to perform S3.2 according to a judging result.

Based on the token acquisition request, the first server may judge, in the following manners, whether the target client terminal is a trust-granted client terminal.

In a first manner, it is judged whether the token acquisition request includes a current trusted login identifier issued by the first server to the second server. If the token acquisition request includes the current trusted login identifier, it is determined that the target client terminal is a trust-granted client terminal. Otherwise, if the token acquisition request does not include the current trusted login identifier, it is determined that the target client terminal is not a trust-granted client terminal.

In a second manner, by using a user mapping relationship between the first server and the second server, it is judged whether the target client terminal is a trust-granted client terminal. When a trusted login relationship is established between the first server and the second server, a mapping relationship between users of the two servers is established. That is, a target user corresponding to a user of the second server is established or found on the first server. For example, when logging in to the first server, a user X of the second server corresponds to a target user XI of the first server. Accordingly, the first server may acquire a user account number of the target client terminal in the token acquisition request, and judge whether a target user account number corresponding to the user account number of the target client terminal exists in the first server. If the target user account number exists, it is determined that the target client terminal is a trust-granted client terminal; otherwise, it is determined that the target client terminal is not a trust-granted client terminal.

Upon judging that the target client terminal is not a trust-granted client terminal, the first server returns a request failure message to the second server. Upon judging that the target client terminal is a trust-granted client terminal, the first server continues to perform S3.2.

S3.2: The first server generates a temporary trusted login token based on the received token acquisition request, and sets a page access service privilege of the temporary trusted login token.

The service privilege may be set for one particular service page or multiple service pages. The setting a page access service privilege of the temporary trusted login token incudes: establishing a first mapping relationship, or establishing a first mapping relationship and a second mapping relationship. The first mapping relationship is a mapping relationship between the temporary trusted login token and a service ID of a service page to which an access is permitted. The second mapping relationship is a mapping relationship between the temporary trusted login token and a current trusted login identifier issued by the first server to the second server. By using the second mapping relationship, the temporary trusted login token is restricted to be valid corresponding to a specified current trusted login identifier (that is, corresponding to a specified server) only. Thus, the temporary trusted login token is prevented from being usurped by another server. For example, in a mapping relationship shown in Table 1, a temporary trusted login token x1579 is valid only to the second server Y1 corresponding to a current trusted login identifier 4627, and is invalid to other servers, for example, a server Y2.

**Table 1**

| Temporary trusted login tokens | Second servers | Service IDs | Current trusted login identifiers |
|---|---|---|---|
| x1579 | Y1 | 101 | 4627 |
| y2641 | Y2 | 101 | 4786 |
| x6478 | Y3 | 103 | 3451 |

In a process of generating the temporary trusted login token, the temporary trusted login token may be generated according to a specific generation rule to render the token legal. Alternatively, a validity period may be set for each temporary trusted login token, and the temporary trusted login token becomes invalid once it expires.

S3.3: The first server sends the generated temporary trusted login token to the target client terminal by using the second server.

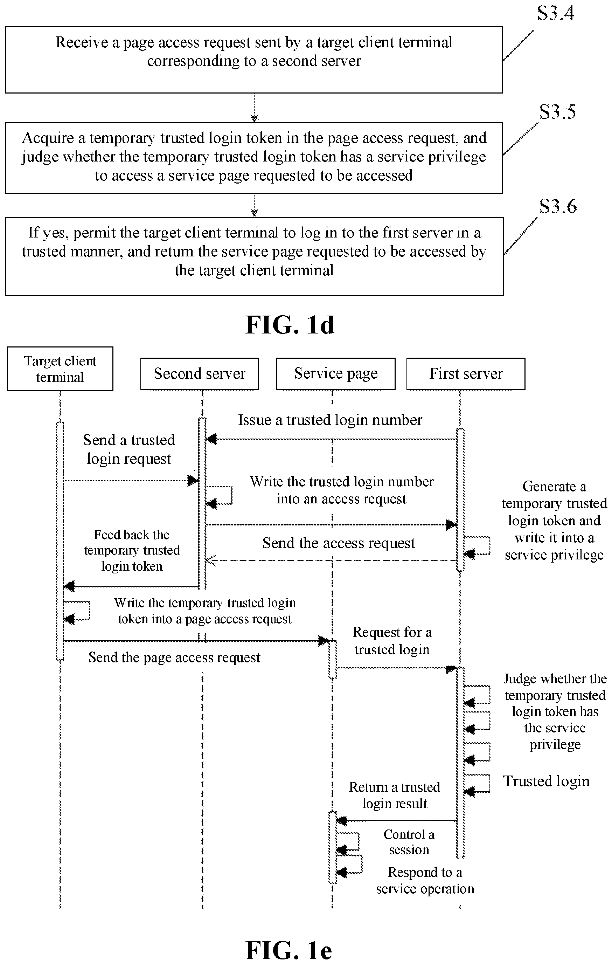

Referring to FIG. 1d, a token verification method in a trusted login method according to an embodiment of the present application is shown. The token verification method is applied to a first server, and includes:
S3.4: The first server receives a page access request sent by a target client terminal corresponding to a second server.
S3.5: The first server acquires a temporary trusted login token in the page access request, and judges whether the temporary trusted login token has a service privilege to access a service page which is requested to be accessed by the target client terminal.

Specifically, in order to enhance information feedback efficiency of the first server, before judgment on the service privilege of the temporary trusted login token, it may be first judged whether the temporary trusted login token is legal or whether it expires. If it is judged that the temporary trusted login token is illegal or it expires, the page access request is refused. If it is judged that the temporary trusted login token is legal and does not expire, the judgment on the service privilege of the temporary trusted login token is performed.

In a specific implementation process, the service privilege of the temporary trusted login token may be judged in any of the following manners.

In a first manner, it is judged whether the temporary trusted login token and a service ID of a service page to be accessed by a target terminal meet a first mapping relationship. Specifically, it may be queried, according to the first mapping relationship between a temporary trusted login token and a service ID that is established by the first server, whether the temporary trusted login token in the page access request corresponds to a service ID in the access request. If a query result indicates that they are corresponding to each other, it is judged that the temporary trusted login token in the page access request matches the service ID, and the temporary trusted login token has the service privilege to access a corresponding service page; otherwise, the temporary trusted login token does not have the service privilege to access a corresponding service page.

In a second manner, it is judged whether the temporary trusted login token and a service ID of a service page to be accessed by a target terminal meet a first mapping relationship, and it is judged whether the temporary trusted login token and a current trusted login identifier meet a second mapping relationship, the current trusted login identifier being issued by the first server to a second server to which the target client terminal belongs. When it is judged that the temporary trusted login token and the service ID of the service page to be accessed by the target terminal meet the first mapping relationship, and that the temporary trusted login token and the current trusted login identifier meet the second mapping relationship, the current trusted login identifier being issued by the first server to a second server to which the target client terminal belongs, the temporary trusted login token has the service privilege to access a corresponding service page. Otherwise, the temporary trusted login token does not have the service privilege to access a corresponding service page. For example, it is assumed that, a mapping relationship established in the first server for the temporary trusted login token is shown in Table 1, the temporary trusted login token in the page access request received by the first server is x6478, the service ID to be accessed is 103, and the current trusted login identifier of the second server to which the target client terminal belongs is 3450. The first server judges, according to Table 1, that the temporary trusted login token in the page access request and the service ID meet the first mapping relationship, but the temporary trusted login token and the current trusted login identifier does not meet the second mapping relationship (the temporary trusted login token x6478 corresponds to a current trusted login identifier 3451, instead of 3450). The temporary trusted login token x6478 is an illegal token which may be usurped or expire. Therefore, the first server may refuse the current service access request.

S3.6: If judging that the temporary trusted login token has the service privilege to access the corresponding service page, the first server permits the target client terminal to log in to the first server in a trusted manner, and returns the service page which is requested to be accessed by the target client terminal. Otherwise, if judging that the temporary trusted login token does not have the service privilege to access the corresponding service page, the first server forbids the target client terminal to access the corresponding service page.

In a specific implementation process, the first server permits the target client terminal to log in to the first server in a trusted manner. The target client terminal can implement a trusted login only on the first server, and does not redirect to a first client terminal of the first server. Instead, the service page is returned to the target client terminal, thus improving user experience. For example, for a map application system A and a payment application system B, a user of the map application system A clicks an access entrance on the target client terminal (that is, map client terminal software), to request to access a service page C of the payment application system B. The payment application system B only needs to verify and complete a trusted login of a user of the target client terminal on the system B, and then return the service page C to the map client terminal software, without the need of redirecting to payment client terminal software of the payment application system B.

Further, the service page provided by the first server may be a page that is loaded to the target client terminal in an embedded manner. A service process and service presentation of the service page are implemented by using an H5 page (i.e., an html5 page, which is a page implemented by using the fifth revised language of the hypertext markup language), thus reducing development of a first application system of the first server. The first server only needs to complete the trusted login and return the page, thus achieving an objective of pushing the service page to more application systems and client terminals.

After the trusted login, the first server may bury an identifier in a corresponding service page. For example, a control over a session between the target client terminal and the service page is written according to a trusted login result, and an identifier of a user of the target client terminal is written into the session, to indicate a success of the trusted login. The target client terminal does not need to log in to the first server again within a validity period. The service page may directly respond to a service operation of the target client terminal within the validity period.

Referring to FIG. 1e, the trusted login method according to an embodiment of the present application is completely described below by using an interaction instance.

S1.1: A target client terminal sends a trusted login request to a second server in response to a user operation on a target access entrance.

For example, it is assumed that an auto insurance access entrance of a payment APP is embedded in a map APP. A user B of the target client terminal clicks the auto insurance access entrance on the map APP. The target client terminal sends a trusted login request to a second server of the map APP in response to the tap operation. A service ID of a service page to be accessed and a user account number of the target client terminal are written in the trusted login request.

S2.1: The second server receives the trusted login request sent by the target client terminal.

S2.2: The second server generates a token acquisition request based on the received trusted login request, and sends the token acquisition request to a first server.

The second server may encapsulate the trusted login request and a current trusted login identifier issued by the first server to generate the token acquisition request, and then send the token acquisition request generated after encapsulation to the first server. For example, the second server of the map APP may encapsulate a current trusted login identifier XXX issued by a server of the payment APP and the received trusted login request, and then send a token acquisition request generated after encapsulation to the first server of the payment APP.

S3.1: The first server receives the token acquisition request sent by the second server.

S3.2: The first server generates a temporary trusted login token and sets a page access service privilege of the temporary trusted login token.

For example, the first server of the payment APP acquires a current trusted login identifier from the received token acquisition request; and determines whether the current trusted login identifier is consistent with a current trusted login identifier saved in the first server and issued to the second server. If they are consistent, the first server may determine the page access service privilege of the target client terminal according to the token acquisition request. If they are inconsistent, the first server refuses the token acquisition request. If it is determined that the target client terminal of the map APP can access an auto insurance page of the payment APP only, the temporary trusted login token is generated, and a page access service privilege of the temporary trusted login token is set that only the auto insurance page can be accessed. Then, the generated temporary trusted login token is sent to the second server of the map APP.

S3.3: The first server sends the generated temporary trusted login token to the target client terminal by using the second server.

Specifically, the first server first feeds the temporary trusted login token back to the second server as feedback information of the token acquisition request. Then, the second server sends the temporary trusted login token to the target client terminal.

S2.3: The second server receives the temporary trusted login token fed back by the first server, and sends the temporary trusted login token to the target client terminal. Specifically, the second server may also send the current trusted login identifier issued by the first server and the temporary trusted login token together to the target client terminal.

S1.2: The target client terminal receives the temporary trusted login token sent by the second server.

S1.3: The target client terminal generates, based on the received temporary trusted login token, a page access request for accessing the service page, and sends the page access request to the first server, to request to log in to the first server and access the service page provided by the first server.

For example, the target client terminal may encapsulate information such as the received temporary trusted login token, the service ID to be accessed, and the current trusted login identifier, and send the page access request generated after encapsulation to the first server of the payment APP.

S3.4: The first server receives the page access request sent by the target client terminal corresponding to the second server.

S3.5: The first server acquires the temporary trusted login token in the page access request, and judges whether the temporary trusted login token has a service privilege to access the service page which is requested to be accessed by the target client terminal.

For example, it is assumed that the page access request includes the temporary trusted login token, the service ID to be accessed, and the current trusted login identifier. According to a mapping relationship table which is shown as Table 1 and established for the temporary trusted login token in advance, the first server of the payment APP may judge whether the temporary trusted login token and the service ID meet a first mapping relationship, and judge whether the temporary trusted login token and the current trusted login identifier meet a second mapping relationship. Upon judging that the temporary trusted login token and the service ID meet the first mapping relationship, and the temporary trusted login token and the current trusted login identifier meet the second mapping relationship, it is determined that the temporary trusted login token has the service privilege to access the service page which is requested to be accessed by the target client terminal. Otherwise, it is determined that the temporary trusted login token does not have the service privilege to access the service page which is requested to be accessed by the target client terminal, and the page access request is refused.

S3.6: If judging that the temporary trusted login token has the service privilege to access the corresponding service page, the first server permits the target client terminal to log in to the first server in a trusted manner, and returns the service page which is requested to be accessed by the target client terminal.

In the foregoing embodiment, by issuing a temporary trusted login token, a first server restricts a privilege of a target client terminal of a second server to access a service page after the target client terminal completes a trusted login, thus effectively protecting other service pages on the first server, solving a security problem in a trusted login solution universally applied in the prior art, and enhancing the security of trusted login. Moreover, the present application uses a manner of returning the service page, so that a complicated login from a second application system to a first application system then back to the second application system can be implemented. In this way, a repeated redirection between application systems is avoided, and user experience is improved.

### Embodiment II

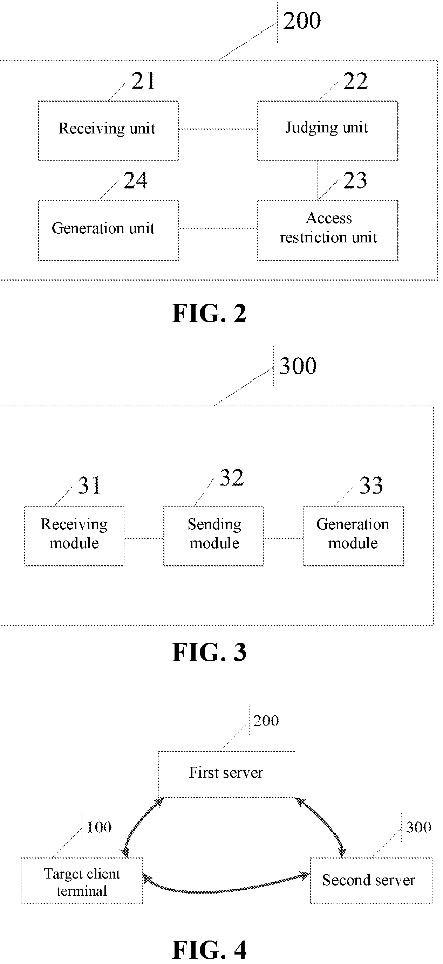

Based on a same invention concept, an embodiment of the present application further provides a first server 200 correspondingly. As shown in FIG. 2, the first server 200 includes:
a receiving unit 21 configured to receive a page access request sent by a target client terminal corresponding to a second server, the page access request being used to request to access a service page provided by the first server;
a judging unit 22 configured to acquire a temporary trusted login token in the page access request and judge whether the temporary trusted login token has a service privilege to access the service page; and
an access restriction unit 23 configured to permit the target client terminal to log in to the first server in a trusted manner, if the temporary trusted login token has the service privilege to access the service page, and return the service page that is requested to be accessed by the target client terminal.

The service page is a page that can be loaded to the target client terminal in an embedded manner.

As an optional implementation, the judging unit 22 may be configured to: judge whether the temporary trusted login token and a service identification of the service page meet a first mapping relationship; and determine that the temporary trusted login token has the service privilege to access the service page, if the temporary trusted login token and the service identification meet the first mapping relationship, or otherwise, determine that the temporary trusted login token does not have the service privilege.

The judging unit 22 may be further configured to: judge whether the temporary trusted login token and a service identification of the service page meet a first mapping relationship, and judge whether the temporary trusted login token and a current trusted login identifier issued by the first server to the second server meet a second mapping relationship; and determine that the temporary trusted login token has the service privilege to access the service page, if the temporary trusted login token and the service identification meet the first mapping relationship and the temporary trusted login token and the current trusted login identifier meet the second mapping relationship.

Before judging whether the temporary trusted login token in the page access request has a service privilege to access the service page, the judging unit 22 may be further configured to: judge whether the temporary trusted login token is legal, and judge whether the temporary trusted login token expires; and perform an operation of judging whether the temporary trusted login token in the page access request has a service privilege to access the service page, if the temporary trusted login token is legal and does not expire.

As an optional implementation, the receiving unit 21 may be further configured to receive a token acquisition request sent by the second server. The judging unit 22 may be further configured to judge, based on the token acquisition request, whether the target client terminal is a trust-granted client terminal. Correspondingly, the first server 200 further includes: a generation unit 24 configured to generate the temporary trusted login token if the target client terminal is a trust-granted client terminal, and set a page access service privilege for the temporary trusted login token; and a sending unit 25 configured to send the temporary trusted login token to the target client terminal by using the second server.

As an optional implementation, the judging unit 22 may be further configured to: judge whether the token acquisition request includes the current trusted login identifier issued by the first server to the second server, and determine that the target client terminal is the trust-granted client terminal if the token acquisition request includes the current trusted login identifier; or judge whether a first client terminal corresponding to the target client terminal exists in the first server, and determine that the target client terminal is the trust-granted client terminal if the first client terminal exists.

Likewise, an embodiment of the present application further provides a second server 300, the second server being a server terminal of a target client terminal. As shown in FIG. 3, the second server 300 includes:
a receiving module 31 configured to receive a trusted login request sent by the target client terminal, the trusted login request being used to request to log in to a first server and access a service page provided by the first server; and
a generation module 32 configured to generate a token acquisition request based on the trusted login request, and send the token acquisition request to the first server by using the sending module 33; where
the receiving module 31 is further configured to receive a temporary trusted login token fed back by the first server, the temporary trusted login token having a service privilege to log in to the first server and access the service page; and
the sending module 33 is further configured to feed the temporary trusted login token back to the target client terminal, so that the target client terminal logs in to the first server and accesses the service page by using the temporary trusted login token.

Specifically, the generation module 32 is configured to acquire a current trusted login identifier issued by the first server to the second server, the current trusted login identifier being a certificate for acquiring the temporary trusted login token; and write the current trusted login identifier into the access request to generate the token acquisition request.

Based on the trusted login method provided by the foregoing embodiment, an embodiment of the present application further provides a trusted login system correspondingly. As shown in FIG. 4, the system includes:
a first server 200;
a second server 300; and
a target client terminal 100 configured to send a trusted login request to the second server 300 in response to a user operation on a target access entrance, the trusted login request being used to request to log in to the first server 200 and access a service page provided by the first server 200; receive a temporary trusted login token sent by the second server 300, the temporary trusted login token having a service privilege to access the service page; generate, based on the temporary trusted login token, an access request for accessing the service page and send the access request to the first server 200, to request to log in to the first server 200 and access the service page.

Specific manners in which modules and units of the apparatus in the foregoing embodiment perform operations have been described in detail in the related method embodiment, so details are not described herein again.

It should be understood that, the present invention is not limited to the precise structure described above and shown in the accompanying drawings, and various modifications and changes may be made without departing from the scope of the present invention. The scope of the present invention is limited only by the appended claims.

The above merely describes preferred embodiments of the present invention, but is not intended to limit the present invention.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, that is, one or more modules of computer program instructions, encoded on non-transitory computer storage media for execution by, or to control the operation of, data processing apparatus. Alternatively or in addition, the program instructions can be encoded on an artificially-generated propagated signal, for example, a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (for example, multiple Compact Discs (CDs), Digital Video Discs (DVDs), magnetic disks, or other storage devices).

The operations described in this specification can be implemented as operations performed by a data processing apparatus on data stored on one or more computer-readable storage devices or received from other sources.

The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

The terms "data processing apparatus," "computer," or "computing device" encompass all kinds of apparatus, devices, and machines for processing data, including by way of example a programmable processor, a computer, a system on a chip, or multiple ones, or combinations, of the foregoing. The apparatus can include special purpose logic circuitry, for example, a central processing unit (CPU), a field programmable gate array (FPGA) or an application-specific integrated circuit (ASIC). The apparatus can also include, in addition to hardware, code that creates an execution environment for the computer program in question, for example, code that constitutes processor firmware, a protocol stack, a database management system, an operating system (for example, LINUX, UNIX, WINDOWS, MAC OS, ANDROID, IOS, another operating system, or a combination of operating systems), a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, software module, software unit, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program can, but need not, correspond to a file in a file system. A program can be stored in a portion of a file that holds other programs or data (for example, one or more scripts stored in a markup language document), in a single file dedicated to the program in question, or in multiple coordinated files (for example, files that store one or more modules, sub-programs, or portions of code). A computer program can be deployed to be executed on one computer or on multiple computers that are located at one site or distributed across multiple sites and interconnected by a communication network.

Processors suitable for the execution of a computer program include, by way of example, both general- and special-purpose microprocessors, and any one or more processors of any kind of digital computer. Generally, a processor will receive instructions and data from a read-only memory or a random-access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, for example, magnetic, magneto-optical disks, or optical disks. However, a computer need not have such devices. Moreover, a computer can be embedded in another device, for example, a mobile device, a personal digital assistant (PDA), a game console, a Global Positioning System (GPS) receiver, or a portable storage device (for example, a universal serial bus (USB) flash drive), to name just a few. Devices suitable for storing computer program instructions and data include all forms of non-volatile memory, media and memory devices, including, by way of example, semiconductor memory devices, for example, erasable programmable read-only memory (EPROM), electrically-erasable programmable read-only memory (EEPROM), and flash memory devices; magnetic disks, for example, internal hard disks or removable disks; magneto-optical disks; and CD-ROM and DVD-ROM disks. The processor and the memory can be supplemented by, or incorporated in, special-purpose logic circuitry.

Mobile devices can include mobile telephones (for example, smartphones), tablets, wearable devices (for example, smart watches, smart eyeglasses, smart fabric, smart jewelry), implanted devices within the human body (for example, biosensors, smart pacemakers, cochlear implants), or other types of mobile devices. The mobile devices can communicate wirelessly (for example, using radio frequency (RF) signals) to various communication networks (described below). The mobile devices can include sensors for determining characteristics of the mobile device's current environment. The sensors can include cameras, microphones, proximity sensors, GPS sensors, motion sensors, accelerometers, ambient light sensors, moisture sensors, gyroscopes, compasses, barometers, fingerprint sensors, facial recognition systems, RF sensors (for example, Wi-Fi and cellular radios), thermal sensors, or other types of sensors. For example, the cameras can include a forward- or rear-facing camera with movable or fixed lenses, a flash, an image sensor, and an image processor. The camera can be a megapixel camera capable of capturing details for facial and/or iris recognition. The camera along with a data processor and authentication information stored in memory or accessed remotely can form a facial recognition system. The facial recognition system or one-or-more sensors, for example, microphones, motion sensors, accelerometers, GPS sensors, or RF sensors, can be used for user authentication.

To provide for interaction with a user, embodiments of the subject matter described in this specification can be implemented on a computer having a display device and an input device, for example, a liquid crystal display (LCD) or organic light-emitting diode (OLED)/virtual-reality (VR)/augmented-reality (AR) display for displaying information to the user and a touchscreen, keyboard, and a pointing device, for example, a mouse or a trackball, by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented using computing devices interconnected by any form or medium of wireline or wireless digital data communication (or combination thereof), for example, a communication network. Examples of communication networks include a local area network (LAN), a radio access network (RAN), a metropolitan area network (MAN), and a wide area network (WAN). The communication network can include all or a portion of the Internet, another communication network, or a combination of communication networks. Information can be transmitted on the communication network according to various protocols and standards, including Worldwide Interoperability for Microwave Access (WIMAX), Long Term Evolution (LTE), Code Division Multiple Access (CDMA), 5G protocols, IEEE 802.11 a/b/g/n or 802.20 protocols (or a combination of 802.11x and 802.20 or other protocols consistent with the present disclosure), Internet Protocol (IP), Frame Relay, Asynchronous Transfer Mode (ATM), ETHERNET, or other protocols or combinations of protocols. The communication network can transmit voice, video, biometric, or authentication data, or other information between the connected computing devices.

Embodiments of the subject matter described in this specification can be implemented using clients and servers interconnected by a communication network. A client and server are generally remote from each other and typically interact through a communication network. The relationship of client and server arises by virtue of computer programs running on the respective computers and having a client-server relationship to each other. A client, for example, a mobile device, can carry out transactions itself, with a server, or through a server, for example, performing buy, sell, pay, give, send, or loan transactions, or authorizing the same.

While this specification contains many specific implementation details, these should not be construed as limitations on the scope of the disclosure and what is claimed. Certain features that are described in this specification in the context of separate implementations can also be implemented, in combination, in a single implementation. Conversely, various features that are described in the context of a single implementation can also be implemented in multiple implementations, separately, or in any suitable subcombination. While operations are described and claimed in a particular order, this should not be understood as requiring that such operations be performed in the particular order shown or in sequential order, or that all illustrated operations be performed (some operations can be considered optional). As appropriate, multitasking or parallel-processing (or a combination of multitasking and parallel-processing) can be performed.

## Claims

1. A computer-implemented method for trusted login in a trusted login system comprising i) a first application system including a first server (200), ii) a second application system including a second server (300), and iii) a target client terminal (100), the method comprising:
receiving (S2.1), at the second server and from the target client terminal, a request for trusted login, wherein the request for trusted login comprises a request to access a service page provided by the first server;
generating (S2.2), by the second server, a trusted login token acquisition request, wherein the trusted login token acquisition request is based on the request for trusted login, the generating comprising
i) obtaining a current trusted login identifier issued by the first server to the second server, wherein the first server issues the current trusted login identifier to certify the second server to obtain a temporary trusted login token, and
ii) writing the current trusted login identifier into the request to access the service page provided by the first server to generate the trusted login token acquisition request;
sending, from the second server, the trusted login token acquisition request to the first server;
receiving (S2.3), at the second server, a temporary trusted login token from the first server, wherein the temporary trusted login token i) comprises service permission to log in to the first server and access the service page, ii) is generated by the first server based on the trusted login token acquisition request, and iii) is sent to the second server in response to the first server determining that the current trusted login identifier written into the request to access the service page by the second server is legal; and
sending (S2.3), from the second server, the temporary trusted login token to the target client terminal, wherein the target client terminal sends the request to access the service page to the first server, wherein i) the request to access the service page includes the temporary trusted login token and ii) the first server permits the target client terminal trusted login to the first server in response to determining that the temporary trusted login token has service permission to access the service page and returns the service page to the target client terminal.

2. The method of claim 1, wherein the temporary trusted login token is sent to the second server in response to the first server determining, based on the trusted login token acquisition request, that the target client terminal is a trusted client terminal.

3. The method of claim 2, wherein determining, based on the trusted login token acquisition request, that the target client terminal is a trusted client terminal comprises:
determining whether the trusted login token acquisition request comprises the current trusted login identifier issued by the first server to the second server; and
determining that the target client terminal is a trusted client terminal if the trusted login token acquisition request comprises the current trusted login identifier.

4. The method of claim 2, wherein determining, based on the trusted login token acquisition request, that the target client terminal is a trusted client terminal comprises:
determining whether a first client terminal corresponding to the target client terminal exists in the first server; and
determining that the target client terminal is a trusted client terminal if the first client terminal exists.

5. The computer-implemented method of claim 1, wherein the temporary trusted login token expires after a validity period.

6. The method of claim 1, wherein the service page is a page that can be loaded to the target client terminal in an embedded manner.

7. A trusted login system for performing trusted login comprising i) a first application system including a first server (200), ii) a second application system including a second server (300), and iii) a target client terminal (100), the trusted login system being configured to perform the method of any one of claims 1 to 6.

## Patentansprüche

1. Computerimplementiertes Verfahren für eine vertrauenswürdige Anmeldung in einem vertrauenswürdigen Anmeldesystem, das Folgendes umfasst i) ein erstes Anwendungssystem, das einen ersten Server (200) enthält, ii) ein zweites Anwendungssystem, das einen zweiten Server (300) enthält, und iii) ein Ziel-Client-Endgerät (100), wobei das Verfahren Folgendes umfasst:
Empfangen (S2.1) einer Anforderung für eine vertrauenswürdige Anmeldung von dem Ziel-Client-Endgerät bei dem zweiten Server, wobei die Anforderung für eine vertrauenswürdige Anmeldung eine Anforderung umfasst, auf eine durch den ersten Server bereitgestellte DienstSeite zuzugreifen;
Erzeugen (S2.2) durch den zweiten Server einer Token-Erfassungsanforderung für eine vertrauenswürdige Anmeldung, wobei die Token-Erfassungsanforderung für eine vertrauenswürdige Anmeldung auf der Anforderung für eine vertrauenswürdige Anmeldung basiert, wobei das Erzeugen Folgendes umfasst
i) Erhalten einer aktuellen Kennung für eine vertrauenswürdige Anmeldung, die durch den ersten Server an den zweiten Server ausgegeben wird, wobei der erste Server die aktuelle Kennung für eine vertrauenswürdige Anmeldung ausgibt, um den zweiten Server zu zertifizieren, um ein temporäres Token für eine vertrauenswürdige Anmeldung zu erhalten, und
ii) Schreiben der aktuellen Kennung für eine vertrauenswürdige Anmeldung in die Anforderung, um auf die durch den ersten Server bereitgestellte Dienstseite zuzugreifen, um die Token-Erfassungsanforderung für eine vertrauenswürdige Anmeldung zu erzeugen;
Senden von dem zweiten Server der Token-Erfassungsanforderung für eine vertrauenswürdige Anmeldung an den ersten Server;
Empfangen (S2.3) eines temporären Tokens für eine vertrauenswürdige Anmeldung von dem ersten Server bei dem zweiten Server, wobei das temporäre Token für eine vertrauenswürdige Anmeldung i) eine Diensterlaubnis umfasst, um sich an dem ersten Server anzumelden und auf die Dienstseite zuzugreifen, ii) durch den ersten Server basierend auf der Token-Erfassungsanforderung für eine vertrauenswürdige Anmeldung erzeugt wird und iii) in Reaktion auf den ersten Server, der bestimmt, dass die aktuelle Kennung für eine vertrauenswürdige Anmeldung, die durch den zweiten Server in die Anforderung, um auf die Dienstseite zuzugreifen, geschrieben worden ist, rechtmäßig ist, an den zweiten Server gesendet wird; und
Senden (S2.3) des temporären Tokens für eine vertrauenswürdige Anmeldung von dem zweiten Server an das Ziel-Client-Endgerät, wobei das Ziel-Client-Endgerät die Anforderung, auf die Dienstseite zuzugreifen, an den ersten Server sendet, wobei i) die Anforderung auf die Dienstseite zuzugreifen, das temporäre Token für eine vertrauenswürdige Anmeldung enthält, und ii) der erste Server dem Ziel-Client-Endgerät die vertrauenswürdige Anmeldung bei dem ersten Server in Reaktion auf das Bestimmen erlaubt, dass das temporäre Token für eine vertrauenswürdige Anmeldung eine Diensterlaubnis aufweist, um auf die Dienstseite zuzugreifen, und die Dienstseite zu dem Ziel-Client-Endgerät zurückschickt.

2. Verfahren nach Anspruch 1, wobei das temporäre Token für eine vertrauenswürdige Anmeldung in Reaktion auf den ersten Server, der basierend auf der Token-Erfassungsanforderung für eine vertrauenswürdige Anmeldung bestimmt, dass das Ziel-Client-Endgerät ein vertrauenswürdiges Client-Endgerät ist, an den zweiten Server gesendet wird.

3. Verfahren nach Anspruch 2, wobei das Bestimmen basierend auf der Token-Erfassungsanforderung für eine vertrauenswürdige Anmeldung, dass das Ziel-Client-Endgerät ein vertrauenswürdiges Client-Endgerät ist, Folgendes umfasst:
Bestimmen, ob die Token-Erfassungsanforderung für eine vertrauenswürdige Anmeldung die aktuelle Kennung für eine vertrauenswürdige Anmeldung umfasst, die durch den ersten Server an den zweiten Server ausgegeben wird, und
Bestimmen, dass das Ziel-Client-Endgerät ein vertrauenswürdiges Client-Endgerät ist, falls die Token-Erfassungsanforderung für eine vertrauenswürdige Anmeldung die aktuelle Kennung für eine vertrauenswürdige Anmeldung umfasst.

4. Verfahren nach Anspruch 2, wobei das Bestimmen basierend auf der Token-Erfassungsanforderung für eine vertrauenswürdige Anmeldung, dass das Ziel-Client-Endgerät ein vertrauenswürdiges Client-Endgerät ist, Folgendes umfasst:
Bestimmen, ob ein erstes Client-Endgerät, das dem Ziel-Client-Endgerät entspricht, in dem ersten Server vorhanden ist; und
Bestimmen, dass das Ziel-Client-Endgerät ein vertrauenswürdiges Client-Endgerät ist, falls das erste Client-Endgerät vorhanden ist.

5. Computerimplementiertes Verfahren nach Anspruch 1, wobei das temporäre Token für eine vertrauenswürdige Anmeldung nach einer Gültigkeitsperiode abläuft.

6. Verfahren nach Anspruch 1, wobei die Dienstseite eine Seite ist, die in einer eingebetteten Weise in das Ziel-Client-Endgerät geladen werden kann.

7. System zur vertrauenswürdigen Anmeldung zum Ausführen einer vertrauenswürdigen Anmeldung, das Folgendes umfasst i) ein erstes Anwendungssystem, das einen ersten Server (200) enthält, ii) ein zweites Anwendungssystem, das einen zweiten Server (300) enthält, und iii) ein Ziel-Client-Endgerät (100), wobei das System zur vertrauenswürdigen Anmeldung dafür ausgelegt ist, das Verfahren nach einem der Ansprüche 1 bis 6 auszuführen.

## Revendications

1. Procédé mis en œuvre par ordinateur pour une connexion sécurisée dans un système de connexion sécurisée comprenant i) un premier système d'application comprenant un premier serveur (200), ii) un second système d'application comprenant un second serveur (300) et iii) un terminal client cible (100), le procédé comprenant :
la réception (S2.1), au niveau du second serveur et à partir du terminal client cible, d'une demande de connexion sécurisée, la demande de connexion sécurisée comprenant une demande d'accès à une page de service fournie par le premier serveur ;
la génération (S2.2), par le second serveur, d'une demande d'acquisition de jeton de connexion sécurisée, la demande d'acquisition de jeton de connexion sécurisée étant basée sur la demande de connexion sécurisée, la génération comprenant
i) l'obtention d'un identifiant de connexion sécurisée actuel délivré par le premier serveur au second serveur, le premier serveur délivrant l'identifiant de connexion sécurisée actuel au second serveur à titre de certification afin d'obtenir un jeton de connexion sécurisée temporaire, et
ii) l'écriture de l'identifiant de connexion sécurisée actuel dans la demande d'accès à la page de service fournie par le premier serveur pour générer la demande d'acquisition de jeton de connexion sécurisée ;
l'envoi, à partir du second serveur, de la demande d'acquisition de jeton de connexion sécurisée au premier serveur ;
la réception (S2.3), au niveau du second serveur, d'un jeton de connexion sécurisée temporaire à partir du premier serveur, le jeton de connexion sécurisée temporaire i) détenant une autorisation de service de se connecter au premier serveur et d'accéder à la page de service, ii) étant généré par le premier serveur en fonction de la demande d'acquisition de jeton de connexion sécurisée, et iii) étant envoyé au second serveur en réponse à la détermination par le premier serveur que l'identifiant de connexion sécurisée actuel est écrit dans la demande d'accès à la page de service par le second serveur est légal ; et
l'envoi (S2.3), à partir du second serveur, du jeton de connexion sécurisée temporaire au terminal client cible, le terminal client cible envoyant la demande d'accès à la page de service au premier serveur, dans lequel i) la demande d'accès à la page de service comporte le jeton de connexion sécurisée temporaire et ii) le premier serveur autorise le terminal client cible à se connecter de manière sécurisée au premier serveur en réponse à la détermination que le jeton de connexion sécurisée temporaire détient une autorisation de service pour accéder à la page de service et renvoie la page de service au terminal client cible.

2. Procédé selon la revendication l, dans lequel le jeton de connexion sécurisée temporaire est envoyé au second serveur en réponse à la détermination par le premier serveur, sur la base de la demande d'acquisition de jeton de connexion sécurisée, que le terminal client cible est un terminal client sécurisé.

3. Procédé de la revendication 2, dans lequel la détermination, sur la base de la demande d'acquisition de jeton de connexion sécurisée, que le terminal client cible est un terminal client sécurisé comprend :
la détermination que la demande d'acquisition de jeton de connexion sécurisée comprend ou non l'identifiant de connexion sécurisée actuel délivré par le premier serveur au second serveur ; et
la détermination que le terminal client cible est un terminal client sécurisé si la demande d'acquisition de jeton de connexion sécurisée comprend l'identifiant de connexion sécurisée actuel.

4. Procédé selon la revendication 2, dans lequel la détermination, sur la base de la demande d'acquisition de jeton de connexion sécurisée, que le terminal client cible est un terminal client sécurisé comprend :
la détermination qu'un premier terminal client correspondant au terminal client cible existe ou non sur le premier serveur ; et
la détermination que le terminal client cible est un terminal client sécurisé si le premier terminal client existe.

5. Procédé selon la revendication 1 mis en œuvre par ordinateur, dans lequel le jeton de connexion sécurisée temporaire expire après une période de validité.

6. Procédé selon la revendication l, dans lequel la page de service est une page qui peut être chargée sur le terminal client cible de manière intégrée.

7. Système de connexion sécurisée destiné à réaliser une connexion sécurisée comprenant i) un premier système d'application comprenant un premier serveur (200), ii) un second système d'application comprenant un second serveur (300), et iii) un terminal client cible (100), le système de connexion sécurisée étant configuré pour réaliser le procédé selon l'une quelconque des revendications 1 à 6.
